# EUROPEAN PATENT APPLICATION

(11) **EP 1 662 365 A1**
(43) Date of publication of application: **31.05.2006**
(21) Application number: 04027912.7
(22) Date of filing: 24.11.2004
(51) Int. Cl.: G06F 3/033

(54) **Page scrolling control device and method for window**

(71) Applicant: TOPSEED TECHNOLOGY CORP., Chung Ho City, Taipei Hsien, Taiwan (CN)
(72) Inventor: Chen, Shoei-Lai, Chung Ho City Taipei Hsien Taiwan 235 (TW)
(74) Representative: TER MEER - STEINMEISTER & PARTNER GbR

(57) **Abstract**

A page scrolling control device and method for window, using a device having a control module operative to switch and scroll window pages expressly, such that the user can perform real-time switch under whole-page mode, single-line mode or scaling display mode for an activated data display window. Thereby, the users can easily and quickly perform control the scroll control to perform whole page, single-line and scaling scroll of the page.

## Description

### BACKGROUND OF THE INVENTION

The present invention relates in general to page scroll control device and method for a window, and more particularly, to an apparatus allowing the user to control signal transmission via connection to the computer, so as to expressly switch page and scroll control mode, so as to perform the whole-page, single-line and scaling scrolling control expressly. The scroll control for accessing a window page can thus be easily achieved.

The popularity and powerful application of computers allow the users to read massive data displayed in a window page and to perform various briefings under a software platform.

Traditionally, when the user is reading data from a window page, the page scroll is typically controlled by pressing the left button, right button, and the central axial rollers of a mouse or the up and down keys of a keyboard connected to the computer via hardwire or wireless communication. For briefing, a remote control input device can be used to control page or section turning of the briefing content. However, the conventional operation is not satisfactory for changing page scroll control mode for page display in real-time. For example, the switch between the whole-page scroll, single-line scroll or scaling mode cannot be performed by the conventional scroll operation anytime when the presented desires because the conventional devices such as mousse, keyboards or remote control input devices are only operative to perform the whole-page or default scroll operation. Using the axial roller of mouse or remote control typically results in scroll of multiple lines or multiple scaling. It is thus difficult to achieve the single-line scroll or scaling of a single line by the conventional deices.

### BRIEF SUMMARY OF THE INVENTION

To resolve the above drawbacks, a signal transmission device of a scroll control unit is provided allowing the one-directional communication between the user and the computer host, so as to provide express switch between multiple scroll modes. Thereby, the user can easily execute the default whole-page, single-line and scaling operations under the selected scroll control mode, and performs precise and real-time stop scroll operations. The content of the window displayed page can thus be more easily controlled, scaled and accessed.

The method and apparatus as provided uses a signal transmission device comprising a page scroll control unit connected to a computer. The communication between the signal transmission device and the computer includes hardwire connection or wireless connection. When a window is activated, the user can use the scroll control unit to select between the whole-page, single-line ad scaling scroll modes. The user can thus easily perform scroll control on a window page for reading, briefing or presentation.

### BRIEF DESCRIPTION OF THE DRAWINGS

The above objects and advantages of the present invention will be become more apparent by describing in detail exemplary embodiments thereof with reference to the attached drawings in which:
Figure 1 shows the structure of a signal transmission device;
Figure 2 shows the structure of a scroll control unit of the signal transmission device;
Figure 3 shows another embodiment of the scroll control unit;
Figure 4 shows another embodiment of the signal transmission device;
Figure 5 shows yet another embodiment of signal transmission device; and
Figure 6 shows the operation process of a scroll control.

### DETAILED DESCRIPTION OF THE INVENTION

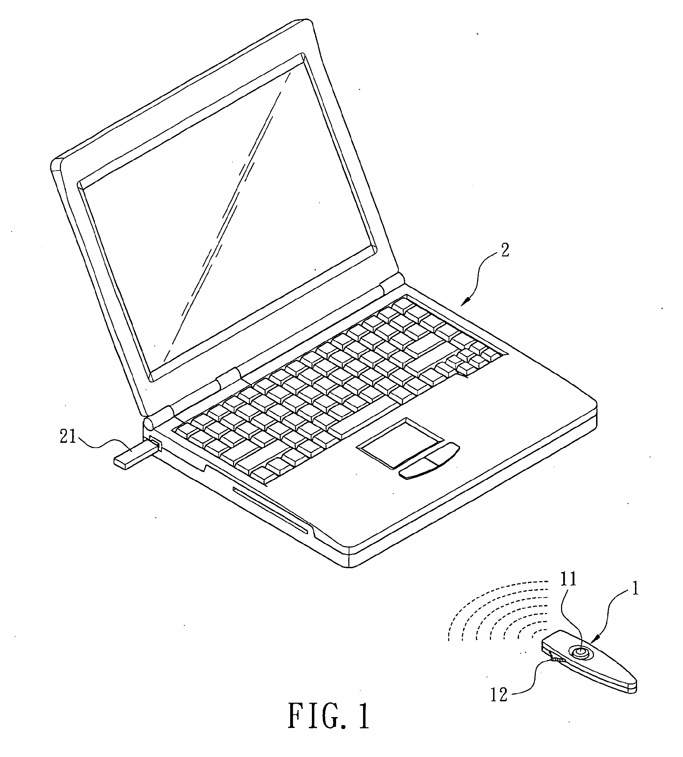

Figure 1 shows a scroll-control deice for a computer window page. As shown, the scroll control device includes a signal transmission control device 1 to transmit a control signal to a signal receiving unit 21 of a controlled device 2 coupled to various types of computers, servers, display devices. The signal receiving device 21 includes a signal receiver or an access point (AP), for example.

The signal transmission control device 1 includes a plurality of input devices 11 allowing the user to input control commands. For example, the user can input control commands similar to the operation of a mouse device. A scroll control unit 12 having express switch function is installed in the signal transmission control device 1 to provide switch between various access modes of a window page of the controlled device 2.

The scroll control unit 12 includes a lift-type or push-type control key. By pressing the respective control keys of the scroll control unit 12, the user can switch between various access modes. The user can also continuously press the control keys. Each press operation switches one access mode to anther. That is, each time when the user presses one control key, a control command signal corresponding to the control key is generated and transmitted to the controlled device. Thereby, when the user desires a specific scroll operation, such as the whole-page scroll, single-line scroll or page- or line-scaling, such scroll operation can be performed by pressing the key until the desired scroll mode is retrieved.

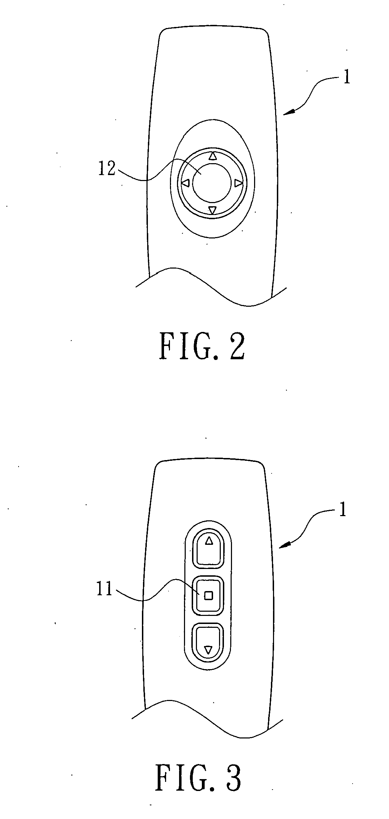

In one embodiment, the scroll control unit 12 includes a single directional key as shown in Figure 2. Each time when the user presses the key, the mode is transferred from one to another. Alternatively, multiple function keys as shown in Figure 3 can be formed to provide such switch function. By expressly switching between the scroll control modes, a fast guide for reading the displayed window page can be obtained.

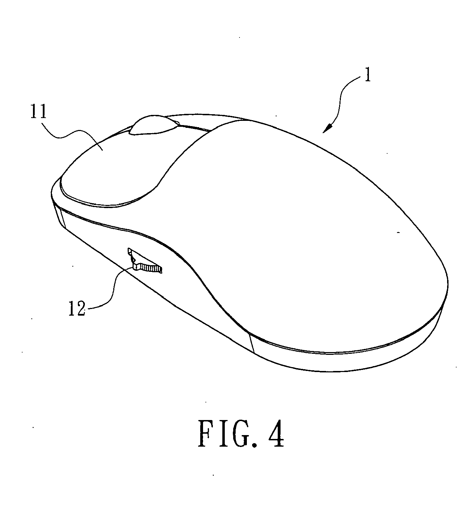

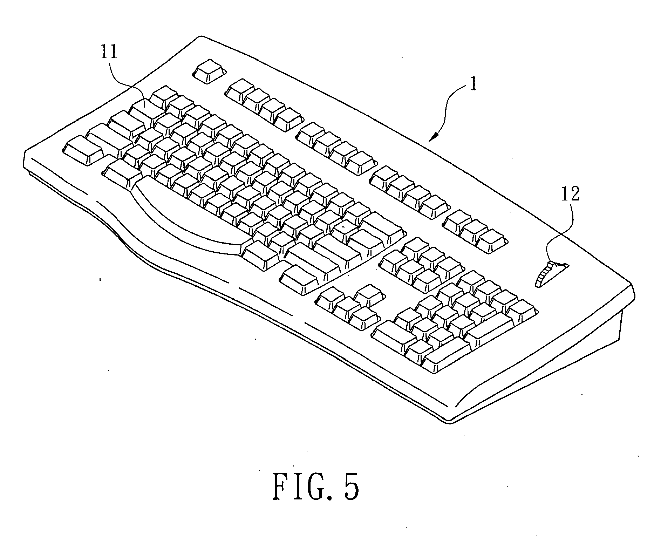

Examples of the signal transmission device 1 includes a mouse or a keyboard having the scroll control unit 12 as shown in Figures 4 and 5, or devices such as a cell phone, a personal data assistant (PDA) or a smart phone, for example.

By the device as provided, a method of scrolling a window page is also provided. The detailed process of the method is explained as follows.

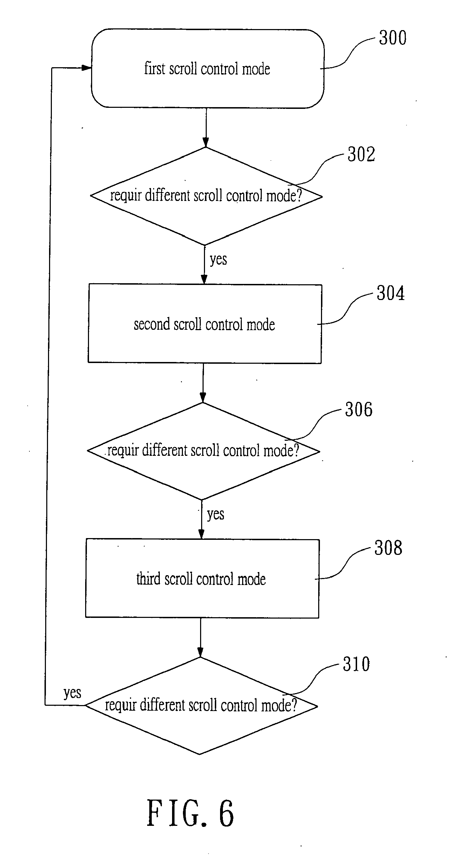

As shown in Figure 6, in the scroll method of a window page, a signal transmission control device 1 is used to expressly select one of a variety of scroll control modes. The signal transmission control device includes a scroll control device operative to generate a signal to activate a specific scroll mode.

When the scroll control unit 12 of the signal transmission device 1 is switched to a first scroll control mode, the user can perform scroll operation by operating the scroll control unit 12 in step 300. For example, the user may select or press the key for scroll up or down the displayed page as desired.

When a different scroll control mode is required in step 302, the user may operate the scroll control unit to switch the first scroll control mode to a second scroll control mode in step 304. As mentioned above, when the scroll control device 12 includes only one mode selection key, the user may continuously press the key until the desired second scroll control mode is selected. When the scroll control device 12 includes a plurality of keys representing respective mode selection keys, the user may press the specific key to activate the second scroll control mode. Once the key is pressed, a signal for activating the second scroll control mode is generated and transmitted to the signal receiving unit 21 of the controlled device 2. The user can thus control to scroll the window page under the second scroll control mode.

When the user intends to scale the current display window page, the scaling mode is selected by pressing the key representing the scaling control mode in step 306. Under the scaling mode, the user may selectively scale a specific line, paragraph or page as desired in step 308. When the user no longer requires the scaling operation, by pressing another key or pressing the same key again, another scroll mode is activated in step 310.

While the present invention has been particularly shown and described with reference to preferred embodiments thereof, it will be understood by those of ordinary skill in the art the various changes in form and details may be made therein without departing from the spirit and scope of the present invention as defined by the appended claims.

## Claims

1. A scroll control method of a computer window page, performed by a signal transmission control device having a page scroll control unit connected to the computer, the method comprising:
displaying the window page;
pressing a key of the page scroll control device to select one of a plurality of scroll control mode;
scrolling the window page by controlling the signal transmission control device; and
pressing another key of the page scroll control device to select another scroll control mode.

2. The method of Claim 1, wherein signal transmission control device includes a plurality of control keys to perform page scroll under the scroll control modes.

3. The method of Claim 2, wherein the control keys include scroll-up key and scroll-down key.

4. The method of Claim 1, wherein the scroll control modes include a whole-page scroll mode, a single-scroll mode, and a scaling mode.

5. The method of Claim 1, wherein the signal transmission control device includes an up control key and a down control key to scroll or scale up and down the window page.

6. A scroll method for a computer window page performed by a signal transmission control device having a page scroll control unit connected to the computer, the method comprising:
displaying the window page;
pressing a key of the page scroll control device to select one of a plurality of scroll control mode;
scrolling the window page by controlling the signal transmission control device; and
pressing the key of the page scroll control device again to select another scroll control mode.

7. The method of Claim 6, wherein signal transmission control device includes a plurality of control keys to perform page scroll under the scroll control modes.

8. The method of Claim 7, wherein the control keys include scroll-up key and scroll-down key.

9. The method of Claim 6, wherein the scroll control modes include a whole-page scroll mode, a single-scroll mode, and a scaling mode.

10. The method of Claim 6, wherein the signal transmission control device includes an up control key and a down control key to scroll or scale up and down the window page.

11. A scroll control device for a window page, comprising:
a controlled device coupled to the computer;
a signal transmission control device coupled to the controlled device;
a scroll control unit installed in the signal transmission control device, operative to switch between a plurality of scroll control modes.

12. The device of Claim 11, wherein the scroll control unit includes at least one key for activating respective scroll control modes.

13. The device of Claim 11, wherein the key include a lift-type key.

14. The device of Claim 11, wherein the key includes a push-type key.

15. The device of Claim 11, wherein the scroll control modes include a whole-page scroll mode, a single-line scroll mode and a scale mode.

16. The device of Claim 11, wherein when the scroll control unit includes only one key, the scroll control unit is operative to switch between the scroll modes by continuous press operation performed thereon.

17. The device of Claim 11, wherein the signal transmission control device includes a mouse, a keyboard, a cell phone, a personal digital assistant or a smart phone.

18. The device of Claim 11, wherein the signal transmission control device is coupled to the controlled device via hardwire or wireless communication.

19. The device of Claim 11, wherein the controlled device includes a computer, a server or a display device.
